**Europäisches Patentamt**

**European Patent Office**

**Office européen des brevets**

(19)

(11) Veröffentlichungsnummer : **0 399 210 B1**

(12)

# EUROPÄISCHE PATENTSCHRIFT

(45) Veröffentlichungstag der Patentschrift :
**15.07.92 Patentblatt 92/29**

(51) Int. Cl.$^5$ : **F16B 5/02,** E04B 1/76,
E04D 5/14

(21) Anmeldenummer : **90107328.8**

(22) Anmeldetag : **18.04.90**

(54) **Befestigungselement zur Befestigung von plattenartigem Wärmeisoliermaterial.**

(30) Priorität : **20.05.89 DE 3916515**

(43) Veröffentlichungstag der Anmeldung :
**28.11.90 Patentblatt 90/48**

(45) Bekanntmachung des Hinweises auf die
Patenterteilung :
**15.07.92 Patentblatt 92/29**

(84) Benannte Vertragsstaaten :
**AT BE CH FR GB LI LU NL SE**

(56) Entgegenhaltungen :
**DD-A- 244 787**
**DE-A- 3 713 686**

(73) Patentinhaber : **FRIEDR. TRURNIT GMBH**
**Rahmedestrasse 161**
**W-5990 Altena (DE)**

(72) Erfinder : **Trurnit, Friedrich Wilhelm**
**Im Lissingsiepen 21**
**W-5990 Altena (DE)**

(74) Vertreter : **Schröter, Martin, Dipl.-Ing.**
**Im Tückwinkel 22**
**W-5860 Iserlohn (DE)**

EP 0 399 210 B1

Jouve, 18, rue Saint-Denis, 75001 PARIS

## Beschreibung

Die Erfindung betrifft ein Befestigungselement nach dem Oberbegriff des Anspruchs 1 zur Befestigung von plattenartigem Wärmeisoliermaterial, welches vorzugsweise an Dachaufbauten verwendet wird.

Bei einem aus der DE-A-37 13 686 bekannten Befestigungselement ist ein Dübelelement aus Kunststoff mit einer kopfseitigen Haltescheibe, einer daran anschließenden rohrformigen Vertiefung, an der ausknickbare Stege angeformt sind, vorgesehen, die an ihrem äußeren Ende durch eine Kunststoffhülse verbunden sind. Eine zugehörige Schraube ist durch die Haltescheibe in das Dübelelement einführbar. Sie stützt sich mit ihrem Kopf im Inneren in dem Dübelelement, vorzugsweise in der rohrförmigen Vertiefung, ab und greift mit ihrem selbstschneidenden Gewindeende in die Kunststoffhülse des Dübelelementes ein. Beim Anziehen der Schraube knicken die Kunststoffstege aus, dabei wandert die Kunststoffhülse des Dübelelementes in Richtung auf den Schraubenkopf zu. Beim Anbringen eines plattenartigen Wärmeisoliermaterials an einer Abstützplatte bilden die ausgeknickten Stege des Befestigungselementes pfeilförmig gegeneinander stehende Anlage- bzw. Verklammerungselemente an der vor dem Isoliermaterial aufgebrachten dünnen Abstützplatte. Als nachteilig erweist es sich dabei, daß zwangsläufig die sich bildenden Anlageelemente aus den ausgeknickten Stegen pfeilförmig aufeinander zulaufen und damit nur im Bereich der Pfeilspitze an der vor dem Isoliermaterial angeordneten Abstützplatte anliegen. Diese relativ geringe Anlagefläche führt zu einer erhöhten Flächenpressung, so daß sich die die Anlageelemente bildenden Stege in unerwünschter Weise in das Isoliermaterial bzw. die Bohrung in der davor angeordneten Abstützplatte hineinziehen. Die Befestigung kann sich dabei unter Umständen lösen.

Der Erfindung liegt die Aufgabe zugrunde, das eingangs genannte Befestigungselement bezüglich seiner Anlageelemente in der Befestigungsposition zu verbessern.

Gelöst wird die Aufgabe mit einem Befestigungselement mit sämtlichen Merkmalen des Anspruches 1.

Aufgrund der entsprechenden Abstimmung der Schwergängigkeit des an das selbstschneidende Gewindeende anschließenden Gewindeabschnittes des Schraubenschaftes mit dem Widerstandsmoment des Dübelelementes im Bereich seiner Haltestege wird beim Einsatz des erfindungsgemäßen Befestigungselementes erreicht, daß sich die Stege mit der Kunststoffhülse zunächst um einen Winkelbereich zwischen 30 - 90°, vorzugsweise 45°, verdrillen. Am Ende dieses Drehwinkelbereiches ist entweder das aufgrund der Schwergängigkeit des Gewindeabschnittes übertragbare Drehmoment kleiner als das rückdrehende Widerstandsmoment oder es gelangt der nachfolgende Gewindeabschnitt mit wiederum geringerer Schwergängigkeit in den Bereich der Kunststoffhülse. Beim weiteren Einschrauben der Schraube in die Kunststoffhülse bewegt sich die Kunststoffhülse in der verdrillten Position in Richtung auf den Schraubenkopf zu und die Kunststoffstege knicken ebenfalls in der entsprechenden verdrillten Position aus und legen sich jeweils so zusammen, daß sie im Endzustand etwa senkrecht zur Schraubenachse stehende Anlageelemente bilden. Diese Anlageelemente liegen beim Einsatz des Befestigungselementes an einem plattenartigen, durchdrungenen Material nahezu über ihre gesamte Länge auf und bilden dann in dieser Position relativ weit abspreizende Anlageelemente.

Ausführungsbeispiele der Erfindung werden im folgenden anhand der Abbildungen näher erläutert. Es zeigen:

Fig. 1 ein im unteren Bereich teilweise geschnittenes Befestigungselement,

Fig. 2 eine zugehörige Seitenansicht des Befestigungselementes in Figur 1,

Fig. 3 die Ansicht der zum Befestigungselement zugehörigen Kopfschraube,

Fig. 4 eine Einbausituation des Befestigungselementes an einem wärmeisolierenden Dachaufbau nach dem Durchstecken eines Befestigungselementes,

Fig. 5 eine Figur 4 entsprechende Darstellung am Beginn des Anziehens der Schraube des Befestigungselementes zur Darstellung des Verdrillungsvorganges der Stege,

Fig. 6 die Figur 4 entsprechende Darstellung in der Befestigungsposition, in der die Stege Anlageelemente bilden,

Fig. 7 eine zugehörige Unteransicht zur Darstellung in Figur 6 und

Fig. 8 eine Variante des Befestigungselementes.

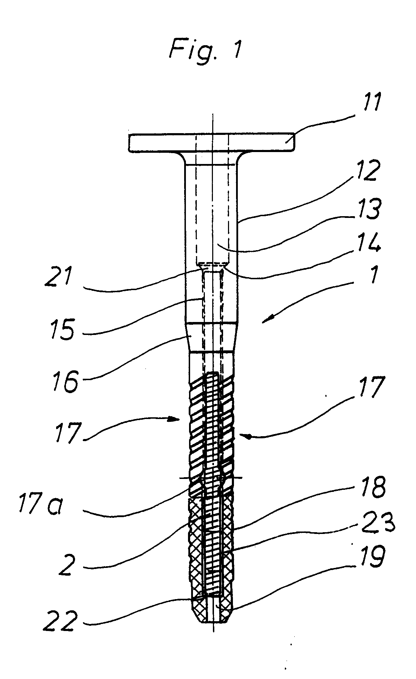

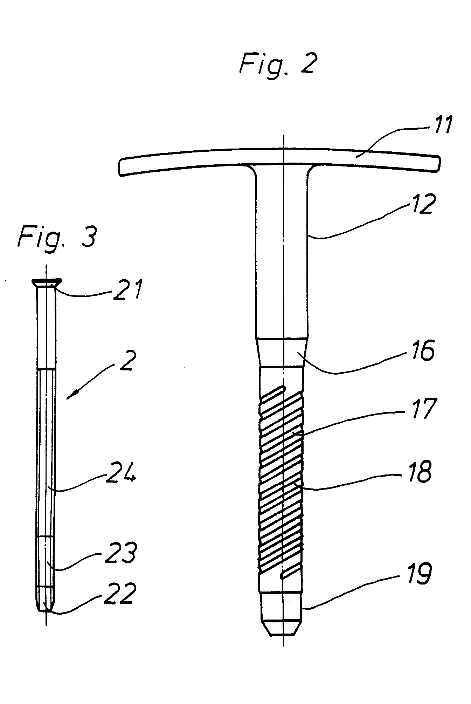

Zunächst wird auf die Figuren 1 - 3 Bezug genommen. Das insgesamt mit der Ziffer 1 bezeichnete Dübelelement aus Kunststoff besteht aus einer im Grundriß etwa rechteckigen Haltescheibe 11 und der daran etwa mittig nach unten angeformten rohrförmigen Vertiefung 12. Diese rohrförmige Vertiefung 12 geht über in einen konischen Absatz 16, an dem zwei sich diametral gegenüberliegende Stege 17 anschließen, die am Ende materialeinheitlich durch die mit der Ziffer 19 bezeichnete Kunststoffhülse verbunden sind. Die Stege 17 sind an ihren Außenkanten etwa mittig mit einer Einkerbung 17a versehen, die die Ausknickung der Stege begünstigen. Außen sind an den Stegen 17 jeweils zueinander parallele, schräg gerichtete Nuten 18 vorgesehen. Eine zugehörige Befestigungsschraube 2, wie sie insbesondere aus Figur 3 ersichtlich ist, wird durch die Bohrung 13

2

in das Dübelelement 1 eingeführt. Sie stützt sich mit ihrem Kopf 21 an dem konischen Abschnitt 14 im Inneren der rohrförmigen Vertiefung 12 ab. Der Schraubenschaft ist durch die Bohrung 15 im Dübelelement 1 hindurchgeführt, vorbei an den beiden Stegen 17. Mit seinem selbstschneidenden Gewindeende 22 greift die Schraube 2 in die Kunststoffhülse 19 ein. An das selbstschneidende Gewindeende 22 schließt ein Gewindeabschnitt 23 an, der in der Hülse 19 zu einer Schwergängigkeit gegenüber dem vorangegangenen Abschnitt führt. Diese Schwergängigkeit kann erreicht werden über eine größere Steigung oder über eine entsprechende andere Strukturierung der Oberfläche des Abschnittes 23. An den Abschnitt 23 schließt wiederum ein Gewindeabschnitt 24 mit normaler Steigung an, die beispielsweise der Steigung des Abschnittes 22 entsprechen kann.

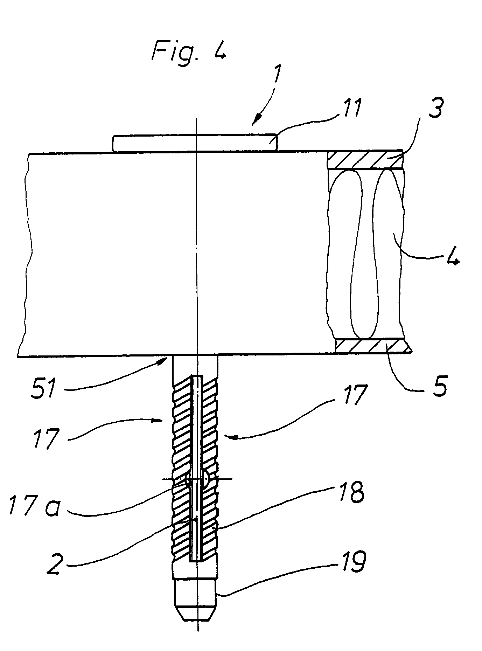

Wie insbesondere aus Figur 4 ersichtlich, wird das Dübelelement 1 durch eine entsprechende Bohrung in einem Isolieraufbau, beispielsweise eines Daches, eingebracht. Diese Bohrung hat in der Regel einen etwas geringeren Durchmesser als der Außendurchmesser der rohrförmigen Vertiefung 12 des Dübelelementes 1 im oberen Bereich einer das Isoliermaterial 4 abdeckenden Kunststoffolie 3. Die rohrförmige Vertiefung 12 setzt mit ihrem Absatz 16 auf einer mit der Ziffer 5 angedeuteten Abstützplatte 5 auf, die das Isoliermaterial 4 nach unten abdeckt. Durch die Bohrung 51 in dieser Abstützplatte 5 ragen die Stege 17 des Dübelelementes 1 mit ihrer endseitigen verbindenden Kunststoffhülse 19 und der aufgenommenen Schraube 2 hindurch.

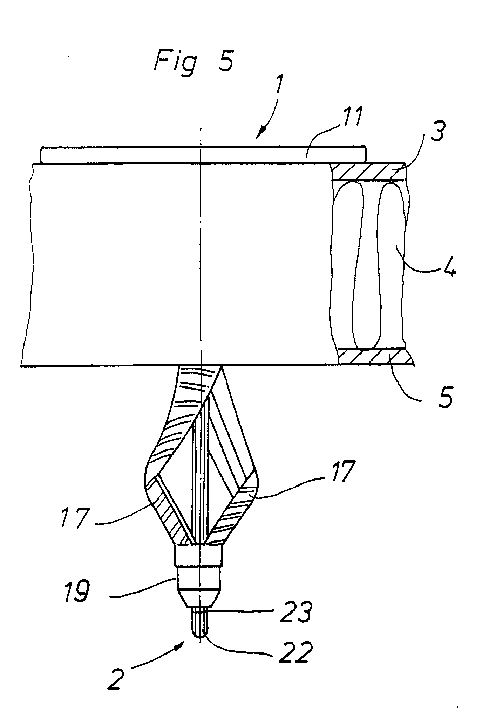

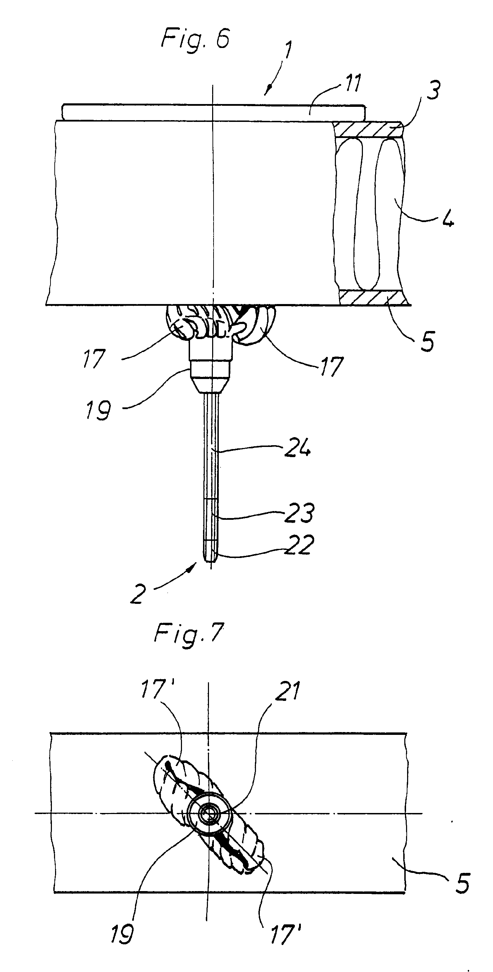

Erfolgt nunmehr von oben her die Verdrehung der Schraube 2 mit einer geeigneten Drehgeschwindigkeit, in der Regel mit einem angetriebenen Schrauber, so schraubt sich zunächst das selbstschneidende Gewindeende 22 durch die Hülse 19 hindurch. Gelangt der schwergängige Gewindeabschnitt 23 in die Hülse, so wird bei geeigneter Drehgeschwindigkeit die Hülse 19 um einen bestimmten Drehwinkelbereich zwischen 30 - 90°, vorzugsweise 45°, in Drehrichtung mitgenommen, dabei verdrillen sich die Stege 17 in die in Figur 5 dargestellte Position und knicken dabei aufgrund der sich auf den Schraubenkopf zu bewegenden Hülse 19 aus. Es gelangt dann der Gewindeabschnitt 24 in den Bereich der Hülse 19. Ohne weitere Verdrillung bewegt sich die Kunststoffhülse 19 weiter auf den Schraubenkopf zu, die beiden Stege 17 knicken weiter in der verdrillten Position aus und kommen in der Endsituation zur Anlage an der Abstützplatte 5, wie in den Figuren 6 und 7 dargestellt. In dieser Lage bilden die um einen bestimmten Winkelbereich verdrillten und ausgeknickten Stege 17′ senkrecht zur Schraubenachse abspreizende Anlageelemente, die mit ihrer Unterseite vollständig an der Abstützplatte 5 anliegen. Das Dübelelement 1 ist in dieser Situation am Isolieraufbau beidseitig fest eingespannt.

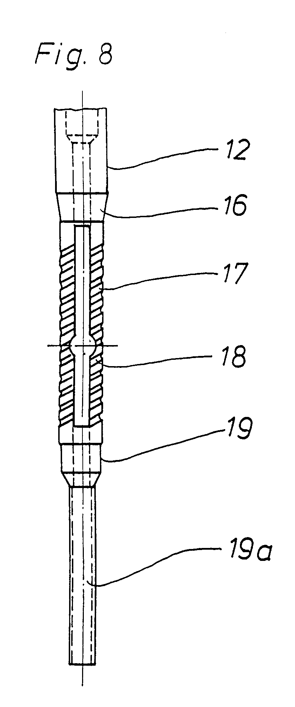

Bei einem Dübelelement entsprechend Figur 8 ist gegenüber dem Dübelelement nach Anspruch 1 an der Kunststoffhülse 19 noch ein schlauchartiges Teil 19a vorgesehen, welches das in der Befestigungssituation herausragende Schraubenende kaschiert.

## Patentansprüche

1. Befestigungselement zur Befestigung von plattenartigem Wärmeisoliermaterial auf einem einschraubfähigen Untergrund, z.B. einer Abstützplatte, bestehend aus einem Dübelelement aus Kunststoff mit einer kopfseitigen Haltescheibe, einer daran anschließenden rohrförmigen Vertiefung, an der ausknickbare Stege angeformt sind, die an ihrem äußeren Ende durch eine Kunststoffhülse verbunden sind und aus einer sich in dem Dübelelement mit ihrem Kopf abstützenden Schraube, die mit ihrem selbstschneidenden Gewindeende in die Kunststoffhülse eingreift und diese durchdringt, **dadurch gekennzeichnet,** daß an das selbstschneidende Gewindeende (22) der Schraube (2) ein Gewindeabschnitt (23) anschließt, der in die Kunststoffhülse (19) mit einer größeren Schwergängigkeit einziehbar ist als das vorangegangene Gewindeende (22), derart, daß sich bei entsprechendem Einschrauben mit erhöhtem Einschraubwiderstand der Schraube (2) die Stege (17) um einen Drehwinkelbereich zwischen 30-90°, vorzugsweise 45°, um die Achse des Dübelelementes (1) verdrillen, und beim weiteren Anziehen der Schraube (2) über den anschließenden in die Kunststoffhülse (19) eindringenden Gewindeabschnitt (24) in der verdrillten Position ausknicken, und die im Endzustand gegeneinander zusammengeknickten Stege (17) jeweils etwa senkrecht zur rohrförmigen Vertiefung (12) abspreizende Anlageelemente an dem einschraubfähigen Untergrund (5) bilden.

2. Befestigungselement nach Anspruch 1, **dadurch gekennzeichnet,** daß etwa mittig an den Außenkanten von zwei sich diametral gegenüberliegenden Stegen (17) jeweils Einkerbungen (17a) oder dergleichen vorgesehen sind.

3. Befestigungselement nach Anspruch 1, **dadurch gekennzeichnet,** daß im Anschluß an die Kunststoffhülse (19) am Dübelelement (1) ein schlauchartiger Abdeckabschnitt (19a) angeformt ist zur Abdeckung des die Hülse (19) durchdringenden Gewindeabschnittes der Schraube (2).

4. Befestigungselement nach Anspruch 1, **gekennzeichnet durch** eine Schraube (2) mit einem an das selbstschneidende Gewindeende (22) anschließenden Gewindeabschnitt (23) mit einer größeren Steigung als das vorangegangene Gewindeende (22).

## Claims

1. Securing element for securing plate-like heat insulating material on a base, which can be screwed in position, e.g. a support plate, comprising a dowel element, which is formed from plastics material and has a retaining plate at the head end, a tubular recess which communicates therewith, bendable ribs being moulded on said recess, which are connected at their outer end by means of a plastics material sleeve, and a screw, which is supported by its head in the dowel element, said screw engaging in the plastics material sleeve with its self-tapping threaded end and penetrating such, **characterised in that** a threaded portion (23) communicates with the self-tapping threaded end (22) of the screw (2) and can be drawn into the plastics material sleeve (19) with a greater tightness than the preceding threaded end (22) such that, when the screw (2) is appropriately screwed in position with an increased screwing resistance, the ribs (17) twist around the axis of the dowel element (1) through a rotational angle range of between 30° and 90°, preferably 45°, and, upon further tightening of the screw (2), they bend over the communicating threaded portion (24), which penetrates the plastics material sleeve (19), in the twisted position, and the ribs (17), which are compressed towards one another in their end position, each form abutment elements, which splay-out substantially at right angles relative to the tubular recess (12) and abut against the screwable base (5).

2. Securing element according to claim 1, **characterised in that** respective notches (17a) or the like are provided substantially centrally at the external edges of every two diametrically opposed ribs (17).

3. Securing element according to claim 1, **characterised in that** a hose-like cover portion (19a) is moulded on the dowel element (1) so as to communicate with the plastics material sleeve (19) and serves to cover the threaded portion of the screw (2) penetrating the sleeve (19).

4. Securing element according to claim 1, **characterised by** a screw (2) having a threaded portion (23), which communicates with the self-tapping threaded end (22) and has a greater pitch than the preceding threaded end (22).

## Revendications

1. Elément de fixation d'une matière thermiquement isolante en forme de plaque sur un support pouvant être fixé par vissage, par exemple une plaque d'appui, se composant d'une cheville en matière plastique pourvue d'une tête en forme de rondelle de retenue, d'un évidement de forme tubulaire contigu et sur lequel sont formées des nervures repliables qui sont reliées à leurs extrémités extérieurs par un fourreau en matière plastique, et également d'une vis s'appuyant dans la cheville par sa tête et qui est engagée par son extrémité filetée autotaraudante dans le fourreau en matière plastique en le traversant, **caractérisé en ce** qu'il est prévu à la suite de l'extrémité filetée autotaraudante (22) de la vis (2) une partie filetée (23), qui peut être vissée dans le fourreau en matière plastique (19) avec une plus grande difficulté de pénétration que l'extrémité filetée précédente (22) de telle sorte que, lors d'un vissage correspondant à une augmentation de la résistance au vissage de la vis (2), les nervures (17) soient tordues autour de l'axe de la cheville (1) dans une plage angulaire de rotation comprise entre 30 et 90°, de préférence de 45°, et que, lors d'un serrage additionnel de la vis (2) par l'intermédiaire de la partie filetée contigu (24) pénétrant dans le fourreau en matière plastique (19), les nervures soient repliées dans la position tordue et en ce que les nervures (17) repliées ensemble à l'état final dans des positions mutuellement opposées forment sur le support (5) apte à être vissé des parties d'appui s'étalant chacune à peu près perpendiculairement à l'évidement de forme tubulaire (12).

2. Elément de fixation selon la revendication 1, **caractérisé en ce** qu'il est prévu des saignées (17a) ou analogues respectivement à peu près au milieu sur les bords extérieurs de deux nervures (17) situées dans des positions diamétralement opposées.

3. Elément de fixation selon la revendication 1, **caractérisé en ce** qu'à la suite du fourreau (19) en matière plastique de la cheville (1) est formée une partie de recouvrement (19a) du genre tuyau souple qui sert à masquer la partie filetée de la vis (2) qui traverse le fourreau (19).

4. Elément de fixation selon la revendication 1, **caractérisé par** une vis (2) comportant une partie filetée (23), situé à la suite de l'extrémité filetée autotaraudante (22) ayant un plus grand pas que celui de l'extrémité filetée précédente (22).

Fig. 1

11

12

13

14

1

21

15

16

17

17

17a

18

23

2

19

22

Fig. 2

Fig. 3

11

12

16

17

18

19

21

2

24

23

22

Fig. 4

Fig 5

Fig. 6

Fig. 7

Fig. 8

12

16

17

18

19

19a